# EUROPEAN PATENT APPLICATION

(11) **EP 4 542 688 A1**
(43) Date of publication of application: **23.04.2025**
(21) Application number: 23922474.4
(22) Date of filing: 08.12.2023
(51) Int. Cl.: H01M 4/66

(54) **NEGATIVE CURRENT COLLECTOR, PREPARATION METHOD THEREFOR, AND BATTERY AND ELECTRIC DEVICE INCLUDING SAME**

(30) Priority: 17.02.2023 CN 202310130053
(71) Applicant: Contemporary Amperex Technology (Hong Kong) Limited, Hong Kong (HK)
(72) Inventor: XIONG, Xueqing, Ningde, Fujian 352100 (CN); WANG, Yiheng, Ningde, Fujian 352100 (CN); ZHENG, Yilin, Ningde, Fujian 352100 (CN); GE, Xiaoming, Ningde, Fujian 352100 (CN)
(74) Representative: Ziebig Hengelhaupt Intellectual Property Attorneys Patentanwaltskanzlei PartGmbB
(86) International application number: PCT/CN2023/137525
(87) International publication number: WO 2024/169358

(57) **Abstract**

This application discloses a negative current collector, a method for preparing same, a battery containing same, and an electrical device. The negative current collector includes a substrate and a first three-dimensional framework layer located on at least one surface of the substrate. The first three-dimensional framework layer forms a pore structure. The first three-dimensional framework layer includes first fibers. Each first fiber includes a carbon-based material.

## Description

### CROSS-REFERENCE TO RELATED APPLICATIONS

This application claims priority to Chinese Patent Application No. 202310130053.4, filed on February 17, 2023 and entitled "NEGATIVE CURRENT COLLECTOR, METHOD FOR PREPARING SAME, BATTERY CONTAINING SAME, AND ELECTRICAL DEVICE", which is incorporated herein by reference in its entirety.

### TECHNICAL FIELD

This application relates to the field of battery technology, and in particular, to a negative current collector, a method for preparing same, a battery containing same, and an electrical device.

### BACKGROUND

In recent years, batteries have been widely applied in energy storage power systems such as hydro, thermal, wind, and solar power stations, and in many other fields such as electric tools, electric bicycles, electric motorcycles, electric vehicles, military equipment, and aerospace. With the application and popularization of batteries, the energy density of conventional batteries that use a material such as graphite and hard carbon as a negative electrode no longer meets the requirement. Therefore, a battery system with a higher energy density is required. Batteries that use a material such as lithium metal as a negative electrode are considered to be the most promising battery system to replace conventional ion batteries. However, during charge and discharge of a battery that uses a material such as lithium metal as a negative electrode, dendrites and volume expansion occur severely, thereby leading to inferior cycle performance and low reliability of the battery.

### SUMMARY

This application provides a negative current collector, a method for preparing same, a battery containing same, and an electrical device to improve the processing performance of the negative current collector while improving the cycle performance and reliability of the battery.

A first aspect of this application provides a negative current collector. The negative current collector includes a substrate and a first three-dimensional framework layer located on at least one surface of the substrate. The first three-dimensional framework layer forms a pore structure. The first three-dimensional framework layer includes first fibers. Each first fiber includes a carbon-based material.

The negative current collector disclosed herein possesses an abundant three-dimensional pore structure, good conductivity, and excellent affinity concurrently, and can effectively regulate the deposition method of the metal, effectively slow down growth of dendrites, and alleviate the volume expansion of the negative electrode, thereby improving the cycle performance and reliability of the battery. In addition, this application can reduce the difficulty of the preparation process of the negative current collector and the battery, simplify the preparation procedure of the negative current collector and the battery, and improve the processing performance of the negative current collector and the battery.

In any embodiment of this application, the first fibers include one or more of carbon fibers or graphitized carbon fibers.

In any embodiment of this application, the first fiber assumes a hollow structure. This arrangement facilitates metal deposition, and improves the cycle performance and reliability of the battery, and also improves the gravimetric energy density of the battery.

In any embodiment of this application, a wall thickness of the first fiber is 0.04 µm to 2 µm, and optionally 0.06 µm to 1 µm. When the wall thickness of the first fiber falls within the above range, the negative current collector can deposit metal more efficiently while achieving high strength and good processing performance, and improve the cycle performance and reliability of the battery.

In any embodiment of this application, a surface of the first fiber assumes a pore structure, thereby increasing the specific surface area of the first three-dimensional framework layer, facilitating metal deposition, and improving the cycle performance and reliability of the battery.

In any embodiment of this application, a surface of the first fiber is doped with a lithium-philic element. Optionally, the lithium-philic element includes one or more of Ag, Au, Sn, Zn, Pd, Bi, N, B, or P. The doping element can improve the conductivity of the first three-dimensional framework layer, and also increase the affinity of the surface of the first three-dimensional framework layer, induce metal deposition in the three-dimensional structure of the first three-dimensional framework layer, reduce growth of dendrites, and prolong the cycle life of the battery.

In any embodiment of this application, the first three-dimensional framework layer is a fabric layer, and optionally a woven fabric layer. When the first three-dimensional framework layer is a woven fabric layer, it is convenient to distribute the electrical field uniformly and alleviate the problem of rapid growth of dendrites at a local position due to an excessive current density at the local position.

In any embodiment of this application, the first fiber is a fiber tow or a single fiber filament, and optionally a fiber tow.

In any embodiment of this application, a filament diameter of the first three-dimensional framework layer is 0.01 mm to 0.50 mm, and optionally 0.025 mm to 0.20 mm.

In any embodiment of this application, an areal density of the first three-dimensional framework layer is 0.04 mg/cm² to 150 mg/cm², and optionally 0.15 mg/cm² to 70 mg/cm². This arrangement facilitates metal deposition, and improves the cycle performance and reliability of the battery, and also improves the gravimetric energy density of the battery.

In any embodiment of this application, a porosity of the first three-dimensional framework layer is 40% to 95%, and optionally 70% to 88%. This arrangement facilitates metal deposition, and improves the cycle performance and reliability of the battery, and also improves the gravimetric energy density of the battery.

In any embodiment of this application, the substrate is a non-pore structure, a porous structure, or a fabric layer structure.

In any embodiment of this application, the substrate includes a first metal material. Optionally, the first metal material includes one or more of copper, copper alloy, nickel, nickel alloy, aluminum, aluminum alloy, titanium, or titanium alloy.

In any embodiment of this application, the substrate assumes a fabric layer structure. The substrate includes a second three-dimensional framework layer, and the second three-dimensional framework layer includes second fibers. Each second fiber includes a first metal material. Optionally, the first metal material includes one or more of copper, copper alloy, nickel, nickel alloy, aluminum, aluminum alloy, titanium, or titanium alloy.

In any embodiment of this application, the second fiber is made of the first metal material, or, the second fiber includes a non-metal material and a first metal material that overlays a surface of the non-metal material.

In any embodiment of this application, a diameter of the second three-dimensional framework layer is 0.003 mm to 0.60 mm, and optionally 0.01 mm to 0.25 mm.

In any embodiment of this application, an areal density of the second three-dimensional framework layer is 0.1 mg/cm² to 700 mg/cm², and optionally 0.15 mg/cm² to 200 mg/cm². This arrangement improves the gravimetric energy density of the battery, and also endows the negative current collector with appropriate strength, and improves the processing performance of the negative current collector.

In any embodiment of this application, a porosity of the second three-dimensional framework layer is 20% to 95%, and optionally 60% to 92%. This arrangement improves the gravimetric energy density of the battery, and also endows the negative current collector with appropriate strength, and improves the processing performance of the negative current collector.

In any embodiment of this application, the second three-dimensional framework layer is a woven fabric layer.

In any embodiment of this application, the second three-dimensional framework layer is a woven fabric layer that is woven from a warp filament and a weft filament. In a warp direction, the second three-dimensional framework layer includes a first sparse region located in the middle of the framework layer, and a first dense region and a second dense region located at edges of the first sparse region on two sides respectively.

In any embodiment of this application, the second three-dimensional framework layer is a woven fabric layer that is woven from a warp filament and a weft filament. In a weft direction, the second three-dimensional framework layer includes a second sparse region located in the middle of the framework layer, and a third dense region and a fourth dense region located at edges of the second sparse region on two sides respectively.

In any embodiment of this application, the second three-dimensional framework layer is a woven fabric layer that is woven from a warp filament and a weft filament. In a warp direction, the second three-dimensional framework layer includes a first sparse region located in the middle of the framework layer, and a first dense region and a second dense region located at edges of the first sparse region on two sides respectively, and, in a weft direction, the second three-dimensional framework layer includes a second sparse region located in the middle, and a third dense region and a fourth dense region located at edges of the second sparse region on two sides respectively.

By disposing the sparse region and the dense regions in the warp direction and/or the weft direction of the second three-dimensional framework layer, this application can reduce the mass of the negative current collector and facilitate welding of the tab.

In any embodiment of this application, the substrate includes a conductive fabric and a metal layer located on at least one surface of the conductive fabric. The metal layer includes a first metal material. Optionally, the first metal material includes one or more of copper, copper alloy, nickel, nickel alloy, aluminum, aluminum alloy, titanium, or titanium alloy. Optionally, the metal layer assumes a mesh structure. Optionally, the conductive fabric includes a carbon fiber fabric.

In any embodiment of this application, a width of the substrate is denoted as W1, and a width of the first three-dimensional framework layer is denoted as W2, satisfying: W1 > W2, thereby facilitating formation of a tab on the substrate.

In any embodiment of this application, a thickness of the first three-dimensional framework layer is 0.01 mm to 1 mm, and optionally 0.04 mm to 0.4 mm. This arrangement facilitates metal deposition, and improves the cycle performance and reliability of the battery, and also improves the gravimetric energy density of the battery.

In any embodiment of this application, a thickness of the substrate is 0.003 mm to 1 mm, and optionally 0.005 mm to 0.6 mm. This arrangement improves the gravimetric energy density of the battery, and also endows the negative current collector with appropriate strength, and improves the processing performance of the negative current collector.

In any embodiment of this application, a thickness of the negative current collector is 0.015 mm to 1.5 mm, and optionally 0.06 mm to 0.8 mm.

In any embodiment of this application, the negative current collector further includes a second metal material. The second metal material provides a capacity.

In any embodiment of this application, the second metal material is located on the substrate and/or located on a surface and/or the pore structure of the first three-dimensional framework layer.

In any embodiment of this application, the second metal material includes one or more of lithium, lithium alloy, sodium, sodium alloy, potassium, potassium alloy, magnesium, or magnesium alloy.

A second aspect of this application provides a method for preparing a negative current collector. The method includes the following steps: providing a substrate and a first three-dimensional framework layer; compounding the first three-dimensional framework layer onto at least one surface of the substrate to obtain a negative current collector, where the negative current collector includes the substrate and the first three-dimensional framework layer located on at least one surface of the substrate, the first three-dimensional framework layer forms a pore structure, the first three-dimensional framework layer includes first fibers, and each first fiber includes a carbon-based material.

In any embodiment of this application, the method includes the following steps: providing a substrate and a first fibril; preparing a three-dimensional framework structure from the first fibril; and compounding the three-dimensional framework structure onto at least one surface of the substrate and performing a carbonization treatment to obtain a negative current collector.

In any embodiment of this application, the method includes the following steps: providing a first fibril and a second fiber, where the second fiber includes a first metal material; forming woven fabric layers by weaving the first fibril and the second fiber separately, where the woven fabric layer formed from the first fibril is located on at least one surface of the woven fabric layer formed from the second fiber, and then performing a carbonization treatment to obtain a negative current collector.

In any embodiment of this application, the first fibril include one or more of a bio-based organic fiber or a synthetic fiber.

In any embodiment of this application, the bio-based organic fiber includes one or more of a cotton fiber, a lignin fiber, a hemp fiber, a palm fiber, a bamboo fiber, or a modified form or derivative thereof.

In any embodiment of this application, the synthetic fiber includes one or more of a polyacrylonitrile fiber, a polyvinyl pyrrolidone fiber, a polymethyl methacrylate fiber, a poly(styrene-co-acrylonitrile) fiber, or a modified compound or derivative fiber thereof.

In any embodiment of this application, the carbonization treatment is performed in an inert gas atmosphere.

In any embodiment of this application, the carbonization treatment is performed at a temperature of 400 °C to 3600 °C, and optionally 900 °C to 3500 °C.

In any embodiment of this application, a temperature holding time in the carbonization treatment is 1 to 20 hours, and optionally 1.5 to 10 hours.

In any embodiment of this application, a heating rate in the carbonization treatment is 1 °C/min to 20 °C/min, and optionally 5 °C/min to 10 °C/min.

A third aspect of this application provides a battery. The battery includes the negative current collector according to the first aspect of this application or a negative current collector prepared by the method according to the second aspect of this application.

A fourth aspect of this application provides an electrical device. The electrical device includes the battery according to the third aspect of this application.

The electrical device of this application contains the battery disclosed herein, and therefore, achieves at least the same advantages as the battery.

### BRIEF DESCRIPTION OF DRAWINGS

To describe the technical solutions of the embodiments of this application more clearly, the following outlines the drawings to be used in the embodiments of this application. Evidently, the drawings outlined below are merely a part of embodiments of this application. A person of ordinary skill in the art may derive other drawings from such drawings without making any creative efforts.
FIG. 1 is a schematic cross-sectional view of first fibers of a first three-dimensional framework layer of a negative current collector according to an embodiment of this application;
FIG. 2 is a schematic diagram of a negative current collector of a battery according to an embodiment of this application;
FIG. 3 is a schematic diagram of a negative current collector of a battery according to another embodiment of this application;
FIG. 4 is a schematic diagram of a battery according to an embodiment of this application;
FIG. 5 is a schematic exploded view of a battery according to an embodiment of this application;
FIG. 6 is a schematic diagram of a battery module according to an embodiment of this application;
FIG. 7 is a schematic diagram of a battery pack according to an embodiment of this application;
FIG. 8 is a schematic exploded view of an embodiment of the battery pack shown in FIG. 7; and
FIG. 9 is a schematic diagram of an embodiment of an electrical device that contains a battery of this application as a power supply.

The drawings are not necessarily drawn to scale.

List of reference numerals: 1. battery pack; 2. upper box; 3. lower box; 4. battery module; 5. battery; 51. housing; 52. electrode assembly; 53. cover plate; 10. negative current collector; 101. substrate; 102. first three-dimensional framework layer; 1021. first fiber; 10211. shell portion; 10212. cavity.

### DETAILED DESCRIPTION

The following discloses and describes in detail a negative current collector, a method for preparing same, a battery containing same, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, all embodiments and optional embodiments hereof may be combined with each other to form a new technical solution considered to be included in the content disclosed in this application.

Unless otherwise expressly specified herein, all technical features and optional technical features hereof may be combined with each other to form a new technical solution considered to be included in the content disclosed in this application.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Unless otherwise expressly specified, the terms such as "first", "second", "third", and "fourth" used herein are intended to distinguish between different items, but are not intended to describe a specific sequence or order of precedence.

Unless otherwise expressly specified herein, the term "fiber tow" used herein means a collection of individual fiber filaments aligned in the same direction.

Unless otherwise specified, the terms used in this application have the well-known meanings commonly understood by a person skilled in the art.

Unless otherwise specified, the value of a parameter mentioned herein may be measured by various measurement methods commonly used in the art, for example, may be measured according to the method described herein. Unless otherwise specified, the test temperature is 25 °C.

The battery mentioned in an embodiment of this application generally refers to a battery system that can directly use the negative current collector provided herein as a negative electrode, for example, may be a lithium metal battery, an anode-free lithium metal battery, a lithium-sulfur battery, a lithium-air battery, a sodium metal battery, an anode-free sodium metal battery, a sodium-sulfur battery, a sodium-air battery, or the like, without being limited herein.

The theoretical specific capacity of lithium is up to 3860 mAh/g. Batteries that use materials such as lithium or lithium alloy as a negative electrode are usually referred to as lithium metal batteries. A lithium metal battery possesses a high energy density that is much higher than that of a lithium-ion battery that uses materials such as graphite as a negative electrode. Therefore, the batteries represented by lithium metal batteries are considered to be the most promising battery system to replace conventional ion batteries.

However, during charge and discharge of such batteries, the metal deposited on the negative electrode incurs a problem of uneven deposition and dissolution, thereby being prone to generate dendrites and cause a short circuit between the positive electrode and the negative electrode. This usually poses high safety hazards to the batteries, leads to low reliability of the batteries. During the uneven deposition and dissolution of the metal deposited on the negative electrode, a solid electrolyte interface (SEI) film on the surface of the negative electrode keeps breaking and recovering, thereby not only consuming a large amount of electrolyte solution and reducing the Coulombic efficiency of the battery, but also corroding the negative electrode. During the dissolution, the metal deposited on the negative electrode may also incur breakage of dendrites that interrupts the electrical contact with the negative electrode, thereby further aggravating the capacity loss of the battery. In addition, such batteries usually use a metal (such as lithium and sodium) sheet or foil as a negative electrode. Consequently, the negative electrode lacks space for storing metal, and in turn, the negative electrode also incurs a severe volume change during charge and discharge, thereby resulting in further deterioration of the cycle performance of the battery.

Therefore, the battery systems represented by lithium metal batteries usually incur low cycle performance and low reliability. Currently, countermeasures to the above problem mainly include: three-dimensionalization of the negative current collector.

The three-dimensionalization of the negative current collector means that a three-dimensional porous negative current collector (such as a three-dimensional porous copper current collector) is used to replace the two-dimensional planar negative current collector (such as copper foil). The three-dimensional porous negative current collector can reduce the local current density and make the electrical field distribution uniform. In addition, the pore structure in the current collector can serve as a space for storing metal, thereby reducing the volume expansion of the negative electrode and slowing down the growth of dendrites.

However, the inventor hereof has noticed that the isotropic uniformity of the three-dimensional porous negative current collector (such as a three-dimensional porous copper current collector) causes metal ions (such as lithium ions and sodium-ions) to be deposited on the electrode surface preferentially, thereby resulting in nonuniform metal deposition. Consequently, a large amount of dead lithium, dead sodium, and the like are generated during charge and discharge of the battery, thereby failing to effectively slow down the growth of dendrites and alleviate the volume expansion of the negative electrode.

In view of this, the inventor hereby makes improvements on the structure of the negative current collector.

The battery provided in an embodiment of this application includes an electrode assembly and an electrolyte. The electrode assembly generally includes a positive electrode plate, a negative current collector, and a separator. The separator is disposed between the positive electrode plate and the negative current collector, and primarily plays a role in preventing a short circuit.

### [Negative current collector]

The negative current collector includes a substrate and a first three-dimensional framework layer located on at least one surface of the substrate. The first three-dimensional framework layer forms a pore structure. The first three-dimensional framework layer includes first fibers. Each first fiber includes a carbon-based material.

In the negative current collector provided in this embodiment of this application, the first three-dimensional framework layer includes a carbon-based material. The first three-dimensional framework layer is located on at least one surface of the substrate. The first three-dimensional framework layer is a porous structure, thereby reducing the local current density and making electrical field distribution uniform. In addition, the porous structure can also serve as a space for storing metal, thereby reducing the volume change of the negative electrode and slowing down the growth of dendrites.

The carbon-based material is of high affinity for the deposited metal. Therefore, when disposed on at least one surface of the substrate, the first three-dimensional framework layer can effectively slow down the growth of dendrites and alleviate the volume expansion of the negative electrode, thereby improving the cycle performance and reliability of the battery. In addition, the carbon-based material itself can play a role in accommodating active ions (such as lithium ions and sodium-ions). Therefore, compared with conventional three-dimensional porous negative current collectors (such as a three-dimensional porous copper current collector), the negative current collector of this application endows the battery with a longer cycle life.

The carbon-based material possesses a relatively high elastic modulus, and is not easily deformable. However, the carbon-based material itself is a brittle material, and is of low toughness, thereby posing a huge challenge to the industrialization of the carbon-based three-dimensional porous negative current collector. For example, the carbon-based three-dimensional porous negative current collector is of very low tensile strength, and is prone to tear up and pulverize during preparation of the battery. The carbon-based material itself is a non-metal material, and makes the tab not weldable by a conventional welding method (such as ultrasonic welding and laser welding) to implement the current collection of a multi-layer negative electrode. Currently, the tab is typically bonded onto the carbon-based three-dimensional porous negative current collector by using a conductive adhesive, so as to implement the current collection of the multi-layer negative electrode. This not only increases the preparation steps of the battery, but also easily causes problems such as tab cracking and conductive adhesive shedding during the use of the battery, thereby increasing safety hazards.

The negative current collector provided in this embodiment of this application includes a substrate. The substrate may include a metal material, thereby being able to form a tab by a conventional welding method (such as ultrasonic welding and laser welding) or by die-cutting, and in turn, implementing the current collection of the multi-layer negative electrode, and simplifying the preparation process of the negative current collector. In addition, the substrate is of high toughness and tensile strength, and can prevent the first three-dimensional framework layer from tearing and pulverizing during the preparation of the battery, thereby reducing the difficulty of the preparation process of the negative current collector and the battery, and improving the processing performance of the negative current collector and the battery.

Therefore, the negative current collector provided in this embodiment of this application possesses an abundant three-dimensional pore structure, good conductivity, and excellent affinity concurrently, and can effectively regulate the deposition method of the metal, effectively slow down growth of dendrites, and alleviate the volume expansion of the negative electrode, thereby improving the cycle performance and reliability of the battery. In addition, this application can reduce the difficulty of the preparation process of the negative current collector and the battery, simplify the preparation procedure of the negative current collector and the battery, and improve the processing performance of the negative current collector and the battery.

In some embodiments, the first fiber may be a fiber tow or a single fiber filament, and optionally a fiber tow. Optionally, a linear density of the fiber tow may be 1.1 tex to 21.2 tex.

The first fiber includes a carbon-based material. In some embodiments, the first fibers may include one or more of carbon fibers or graphitized carbon fibers.

In some embodiments, the first fibers may include a carbon-based material, and an interlayer spacing of a 002 crystal plane of the carbon-based material may be 0.33 nm to 0.42 nm.

The interlayer spacing of the 002 crystal plane of the carbon-based material may be tested by using an X-ray diffractometer (such as Bruker D8 Discover). The test may be performed with reference to standards JIS K 0131-1996 and JB/T 4220-2011 to obtain an average interlayer spacing d₀₀₂ of the 002 crystal plane in the crystal structure of the carbon-based material.

In some embodiments, the first fiber may assume a hollow structure. This arrangement facilitates metal deposition, and improves the cycle performance and reliability of the battery, and also improves the gravimetric energy density of the battery.

In some embodiments, a wall thickness of the first fiber may be 0.04 µm to 2 µm, and optionally 0.06 µm to 1 µm. When the wall thickness of the first fiber falls within the above range, the negative current collector can deposit metal more efficiently while achieving high strength and good processing performance, and improve the cycle performance and reliability of the battery.

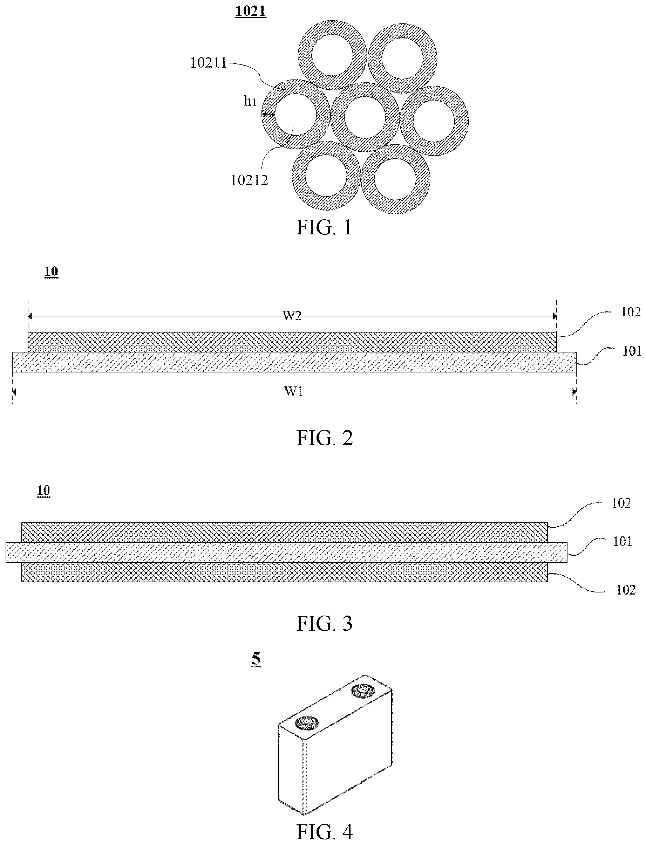

When the first fiber is a fiber tow, the wall thickness of the first fiber means the wall thickness of each fiber filament constituting the fiber tow. When the first fiber is a single fiber filament, the wall thickness of the first fiber is the wall thickness of the fiber filament. FIG. 1 is a schematic cross-sectional view of first fibers of a first three-dimensional framework layer of a negative current collector according to an embodiment of this application. As shown in FIG. 1, the first fiber 1021 is a fiber tow, and each fiber filament constituting the fiber tow assumes a hollow structure. Each fiber filament includes a shell portion 10211 and a cavity 10212 located inside the shell portion 10211. The wall thickness of the shell portion of each fiber filament is h₁. h₁ may be 0.04 µm to 2 µm, and optionally 0.06 µm to 1 µm. To improve accuracy, during the test, the thicknesses at a plurality of (for example, 5 or 10) positions may be measured, and the measured values are averaged out as a test result.

In some embodiments, a surface of the first fiber may assume a pore structure, thereby increasing the specific surface area of the first three-dimensional framework layer, facilitating metal deposition, and improving the cycle performance and reliability of the battery. The pore structure may be obtained by an etching process, such as a plasma etching process or a template etching process.

In some embodiments, a surface of the first fiber may be doped with a lithium-philic element. Optionally, the lithium-philic element includes one or more of Ag, Au, Sn, Zn, Pd, Bi, N, B, or P. The doping element can improve the conductivity of the first three-dimensional framework layer, and also increase the lithium-philic or sodium-philic ability of the surface of the first three-dimensional framework layer, induce metal deposition in the three-dimensional structure of the first three-dimensional framework layer, reduce growth of dendrites, and prolong the cycle life of the battery.

In some embodiments, the first three-dimensional framework layer may be a fabric layer, and optionally a woven fabric layer. When the first three-dimensional framework layer is a woven fabric layer, it is convenient to distribute the electrical field uniformly and alleviate the problem of rapid growth of dendrites at a local position due to an excessive current density at the local position.

In some embodiments, the first three-dimensional framework layer may be obtained by a weaving process, thereby simplifying the preparation process of the negative current collector. The weaving method may be a weaving method known in the art. For example, the weaving method may be one or more of plain weave, twill weave, basket plain weave, basket twill weave, reverse basket weave, and five-heddle weave.

In some embodiments, the filament diameter of the first three-dimensional framework layer may be 0.01 mm to 0.50 mm, and optionally, 0.01 mm to 0.40 mm, 0.01 mm to 0.30 mm, 0.01 mm to 0.20 mm, 0.02 mm to 0.50 mm, 0.02 mm to 0.40 mm, 0.02 mm to 0.30 mm, 0.02 mm to 0.20 mm, 0.025 mm to 0.50 mm, 0.025 mm to 0.40 mm, 0.025 mm to 0.30 mm, or 0.025 mm to 0.20 mm. The filament diameter of the first three-dimensional framework layer is the diameter of the woven filament (first fiber). When the woven filament is a fiber tow, the filament diameter of the first three-dimensional framework layer is the diameter of the fiber tow. When the woven filament is a single fiber filament, the filament diameter of the first three-dimensional framework layer is the diameter of the single fiber filament. To improve accuracy, during the test, the filament diameters at a plurality of (for example, 5 or 10) positions may be measured, and the measured values are averaged out as a test result.

In some embodiments, the areal density of the first three-dimensional framework layer may be 0.04 mg/cm² to 150 mg/cm², and optionally 0.05 mg/cm² to 150 mg/cm², 0.08 mg/cm² to 120 mg/cm², 0.1 mg/cm² to 100 mg/cm², 0.15 mg/cm² to 70 mg/cm², 0.2 mg/cm² to 50 mg/cm², 0.3 mg/cm² to 40 mg/cm², 0.4 mg/cm² to 30 mg/cm², or 0.5 mg/cm² to 25 mg/cm². This arrangement facilitates metal deposition, and improves the cycle performance and reliability of the battery, and also improves the gravimetric energy density of the battery. The areal density of the first three-dimensional framework layer means the areal density of the first three-dimensional framework layer on one side of the substrate.

The areal density of the first three-dimensional framework layer may be obtained by adjusting one or more of the parameters such as the porosity and/or pore diameter of the first three-dimensional framework layer, the type of the first fiber, or the filament diameter of the first fiber. For example, the larger the porosity and/or pore diameter of the first three-dimensional framework layer, the smaller the areal density of the first three-dimensional framework layer. When the first fiber assumes a hollow structure, the first three-dimensional framework layer is of a smaller areal density. By adjusting the wall thickness of the first fiber, the porosity of the first three-dimensional framework layer can be adjusted to fall within an appropriate range.

In some embodiments, the porosity of the first three-dimensional framework layer may be 40% to 95%, and optionally 45% to 92%, 50% to 92%, 55% to 92%, 60% to 92%, 65% to 92%, 70% to 92%, 45% to 90%, 50% to 90%, 55% to 90%, 60% to 90%, 65% to 90%, 70% to 90%, 45% to 88%, 50% to 88%, 55% to 88%, 60% to 88%, 65% to 88%, or 70% to 88%. This arrangement facilitates metal deposition, and improves the cycle performance and reliability of the battery, and also improves the gravimetric energy density of the battery. The porosity of the first three-dimensional framework layer means the porosity of the first three-dimensional framework layer on one side of the substrate.

The porosity of the first three-dimensional framework layer bears the meaning well-known in the art, and may be measured by a method known in the art. An exemplary test method is as follows: Taking a piece of the first three-dimensional framework layer (from the negative current collector), making the piece into a disc specimen of a specified area, and calculating the apparent volume V₁ of the specimen; referring to the standard GB/T24586-2009, using an inert gas (such as helium or nitrogen) as a medium, applying a gas displacement method, and using a true density tester to measure the true volume V₂. The porosity of the first three-dimensional framework layer = (V₁ - V₂)/V₁ × 100%. A plurality of specimens (for example, 30 specimens) may be used for testing, and the measured results are averaged out, thereby improving the accuracy of the test results. The test instrument may be a Micromeritics AccuPyc II 1340 true density tester.

In some embodiments, the thickness of the first three-dimensional framework layer may be 0.01 mm to 1 mm, and optionally 0.03 mm to 1 mm, 0.03 mm to 0.9 mm, 0.03 mm to 0.8 mm, 0.03 mm to 0.7 mm, 0.03 mm to 0.6 mm, 0.03 mm to 0.5 mm, 0.03 mm to 0.4 mm, 0.04 mm to 1 mm, 0.04 mm to 0.9 mm, 0.04 mm to 0.8 mm, 0.04 mm to 0.7 mm, 0.04 mm to 0.6 mm, 0.04 mm to 0.5 mm, or 0.04 mm to 0.4 mm. This arrangement facilitates metal deposition, and improves the cycle performance and reliability of the battery, and also improves the gravimetric energy density of the battery. The thickness of the first three-dimensional framework layer means the thickness of the first three-dimensional framework layer on one side of the substrate. To improve accuracy, during the test, the thicknesses at a plurality of (for example, 5 or 10) positions may be measured, and the measured values are averaged out as a test result.

In some embodiments, the first three-dimensional framework layer may include one or more first sublayers. When the first three-dimensional framework layer includes a plurality of first sublayers, the parameter values (such as filament diameter, areal density, porosity, and thickness) may be the same or different between the first sublayers. When the first three-dimensional framework layer includes a plurality of first sublayers, the filament diameter of each first sublayer needs to fall within the value range of the filament diameter specified herein for the first three-dimensional framework layer. When the first three-dimensional framework layer includes a plurality of first sublayers, the areal density, porosity, and thickness of the first three-dimensional framework layer formed by the plurality of first sublayers need to fall within the value ranges of the areal density, porosity, and thickness specified herein for the first three-dimensional framework layer; and the areal density, porosity, and thickness of each first sublayer optionally fall within the value ranges of the areal density, porosity, and thickness specified herein for the first three-dimensional framework layer.

In some embodiments, the substrate may be a non-pore structure, a porous structure, or a fabric layer structure.

In some embodiments, the substrate may assume a porous structure or a fabric layer structure, and optionally a fabric layer structure, thereby reducing the mass of the negative current collector, increasing the energy density of the battery, and facilitating the metal deposition.

In some embodiments, the substrate includes a first metal material, thereby being able to form a tab by a conventional welding method (such as ultrasonic welding and laser welding) or by die-cutting, and in turn, implementing the current collection of the multi-layer negative electrode, and preventing the first three-dimensional framework layer from tearing and pulverizing during the preparation of the battery.

In some embodiments, the substrate includes a first metal material. The first metal material may include, but is not limited to, one or more of copper, copper alloy, nickel, nickel alloy, aluminum, aluminum alloy, titanium, or titanium alloy.

In some embodiments, the substrate may be metal foil formed by pressing the first metal material. For example, the substrate may include, but is not limited to, one or more of copper foil, copper alloy foil, nickel foil, nickel alloy foil, aluminum foil, aluminum alloy foil, titanium foil, or titanium alloy foil.

In some embodiments, the substrate may assume a pore structure. For example, the substrate may include a pore structure that runs through the thickness direction of the substrate, or the substrate may be a foam pore structure in which a large number of interconnected or unconnected pores are distributed.

In some embodiments, the substrate may include one or more of copper foil, copper alloy foil, nickel foil, nickel alloy foil, aluminum foil, aluminum alloy foil, titanium foil, or titanium alloy foil, each being perforated (for example, perforated by laser).

In some embodiments, the substrate may include one or more of foamed copper, foamed copper alloy, foamed nickel, foamed nickel alloy, foamed aluminum, foamed aluminum alloy, foamed titanium, or foamed titanium alloy.

In some embodiments, the substrate may assume a fabric layer structure. The substrate includes a second three-dimensional framework layer, and the second three-dimensional framework layer includes second fibers. Each second fiber includes a first metal material. Optionally, the first metal material includes, but is not limited to, one or more of copper, copper alloy, nickel, nickel alloy, aluminum, aluminum alloy, titanium, or titanium alloy.

In some embodiments, the second fiber is made of the first metal material. For example, the second fiber may include, but is not limited to, one or more of a copper wire, a copper alloy wire, a nickel wire, a nickel alloy wire, an aluminum wire, an aluminum alloy wire, a titanium wire, or a titanium alloy wire.

In some embodiments, the second fiber may further include a non-metal material and a first metal material that overlays a surface of the non-metal material. For example, the surface of the non-metal material may be overlaid with a layer of the first metal material by evaporation or deposition. Specific examples of the non-metal material may include synthetic fibers, and the like.

In some embodiments, the second three-dimensional framework layer may be a woven fabric layer. For example, the second three-dimensional framework layer may include, but is not limited to, one or more of a copper mesh, a copper alloy mesh, a nickel mesh, a nickel alloy mesh, an aluminum mesh, an aluminum alloy mesh, a titanium mesh, or a titanium alloy mesh.

In some embodiments, the second three-dimensional framework layer may be obtained by a weaving process, thereby simplifying the preparation process of the negative current collector. The weaving method may be a weaving method known in the art. For example, the weaving method may be one or more of plain weave, twill weave, basket plain weave, basket twill weave, reverse basket weave, and five-heddle weave.

In some embodiments, the second fiber may be a fiber tow or a single fiber filament, and optionally a single fiber filament.

In some embodiments, the filament diameter of the second three-dimensional framework layer may be 0.003 mm to 0.60 mm, and optionally 0.005 mm to 0.50 mm, 0.005 mm to 0.40 mm, 0.005 mm to 0.30 mm, 0.005 mm to 0.25 mm, 0.005 mm to 0.20 mm, 0.008 mm to 0.50 mm, 0.008 mm to 0.40 mm, 0.008 mm to 0.30 mm, 0.008 mm to 0.25 mm, 0.008 mm to 0.20 mm, 0.01 mm to 0.50 mm, 0.01 mm to 0.40 mm, 0.01 mm to 0.30 mm, 0.01 mm to 0.25 mm, or 0.01 mm to 0.20 mm. The filament diameter of the second three-dimensional framework layer is the diameter of the woven filament (second fiber). When the woven filament is a fiber tow, the filament diameter of the second three-dimensional framework layer is the diameter of the fiber tow. When the woven filament is a single fiber filament, the filament diameter of the second three-dimensional framework layer is the diameter of the single fiber filament. To improve accuracy, during the test, the filament diameters at a plurality of (for example, 5 or 10) positions may be measured, and the measured values are averaged out as a test result.

In some embodiments, the areal density of the second three-dimensional framework layer may be 0.1 mg/cm² to 700 mg/cm², optionally 0.1 mg/cm² to 500 mg/cm², 0.1 mg/cm² to 400 mg/cm², 0.1 mg/cm² to 300 mg/cm², 0.1 mg/cm² to 200 mg/cm², 0.1 mg/cm² to 150 mg/cm², 0.15 mg/cm² to 700 mg/cm², 0.15 mg/cm² to 500 mg/cm², 0.15 mg/cm² to 400 mg/cm², 0.15 mg/cm² to 300 mg/cm², 0.15 mg/cm² to 200 mg/cm², 0.15 mg/cm² to 150 mg/cm², 0.5 mg/cm² to 700 mg/cm², 0.5 mg/cm² to 500 mg/cm², 0.5 mg/cm² to 400 mg/cm², 0.5 mg/cm² to 300 mg/cm², 0.5 mg/cm² to 200 mg/cm², or 0.5 mg/cm² to 150 mg/cm². This arrangement improves the gravimetric energy density of the battery, and also endows the negative current collector with appropriate strength, and improves the processing performance of the negative current collector.

The areal density of the second three-dimensional framework layer may be obtained by adjusting one or more of the parameters such as the porosity and/or pore diameter of the second three-dimensional framework layer, the type of the second fiber, or the filament diameter of the second fiber. For example, the lower the density of the second fiber, the lower the areal density of the second three-dimensional framework layer; the larger the porosity and/or pore diameter of the second three-dimensional framework layer, the lower the areal density of the second three-dimensional framework layer.

In some embodiments, the porosity of the second three-dimensional framework layer may be 20% to 95%, and optionally 25% to 95%, 30% to 95%, 35% to 95%, 40% to 95%, 45% to 95%, 50% to 95%, 55% to 95%, 60% to 95%, 25% to 92%, 30% to 92%, 35% to 92%, 40% to 92%, 45% to 92%, 50% to 92%, 55% to 92%, or 60% to 92%. This arrangement improves the gravimetric energy density of the battery, and also endows the negative current collector with appropriate strength, and improves the processing performance of the negative current collector.

The porosity of the second three-dimensional framework layer bears the meaning well-known in the art, and may be measured by a method known in the art. An exemplary test method is as follows: Taking a piece of the second three-dimensional framework layer (from the negative current collector), making the piece into a disc specimen of a specified area, and calculating the apparent volume V₃ of the specimen; referring to the standard GB/T24586-2009, using an inert gas (such as helium or nitrogen) as a medium, applying a gas displacement method, and using a true density tester to measure the true volume V₄. The porosity of the second three-dimensional framework layer = (V₃ - V₄)/V₃ × 100%. A plurality of specimens (for example, 30 specimens) may be used for testing, and the measured results are averaged out, thereby improving the accuracy of the test results. The test instrument may be a Micromeritics AccuPyc II 1340 true density tester.

In some embodiments, the second three-dimensional framework layer is a woven fabric layer that is woven from a warp filament and a weft filament. In a warp direction, the second three-dimensional framework layer may include a first sparse region located in the middle of the framework layer, and a first dense region and a second dense region located at edges of the first sparse region on two sides respectively.

The areal density of the first sparse region is less than that of the first dense region, and the areal density of the first sparse region is less than that of the second dense region. Optionally, the areal density of the first dense region is the same as that of the second dense region.

The porosity of the first sparse region is greater than that of the first dense region, and the porosity of the first sparse region is greater than that of the second dense region. Optionally, the porosity of the first dense region is the same as that of the second dense region.

In some embodiments, the second three-dimensional framework layer is a woven fabric layer that is woven from a warp filament and a weft filament. In a weft direction, the second three-dimensional framework layer may include a second sparse region located in the middle of the framework layer, and a third dense region and a fourth dense region located at edges of the second sparse region on two sides respectively.

In some embodiments, the second three-dimensional framework layer is a woven fabric layer that is woven from a warp filament and a weft filament. In a warp direction, the second three-dimensional framework layer includes a first sparse region located in the middle of the framework layer, and a first dense region and a second dense region located at edges of the first sparse region on two sides respectively, and, in a weft direction, the second three-dimensional framework layer includes a second sparse region located in the middle, and a third dense region and a fourth dense region located at edges of the second sparse region on two sides respectively.

The areal density of the second sparse region is less than that of the third dense region, and the areal density of the second sparse region is less than that of the fourth dense region. Optionally, the areal density of the third dense region is the same as that of the fourth dense region.

The porosity of the second sparse region is greater than that of the third dense region, and the porosity of the second sparse region is greater than that of the fourth dense region. Optionally, the porosity of the third dense region is the same as that of the fourth dense region.

By disposing the sparse region and the dense regions in the warp direction and/or the weft direction of the second three-dimensional framework layer, this application can reduce the mass of the negative current collector and facilitate welding of the tab.

In some embodiments, the second three-dimensional framework layer is a woven fabric layer that is woven from a warp filament and a weft filament. The warp filament and weft filament may be made of the same material or different materials.

In some embodiments, the second three-dimensional framework layer may include one or more second sublayers. When the second three-dimensional framework layer includes a plurality of second sublayers, the parameter values (such as filament diameter, areal density, porosity, and thickness) may be the same or different between the second sublayers. When the second three-dimensional framework layer includes a plurality of second sublayers, the filament diameter of each second sublayer needs to fall within the value range of the filament diameter specified herein for the second three-dimensional framework layer. When the second three-dimensional framework layer includes a plurality of second sublayers, the areal density, porosity, and thickness of the second three-dimensional framework layer formed by the plurality of second sublayers need to fall within the value ranges of the areal density, porosity, and thickness specified herein for the second three-dimensional framework layer; and the areal density, porosity, and thickness of each second sublayer also optionally fall within the value ranges of the areal density, porosity, and thickness specified herein for the second three-dimensional framework layer.

In some embodiments, both the substrate and the first three-dimensional framework layer may be fabric layers. Optionally, both the substrate and the first three-dimensional framework layer are woven fabric layers.

When both the substrate and the first three-dimensional framework layer are woven fabric layers, the first fiber (or fibril thereof) and the second fiber can be woven together through a multi-layer weave process or a blending process, thereby increasing the bonding strength between the substrate and the first three-dimensional framework layer and simplifying the preparation process of the negative current collector.

In some embodiments, the substrate may include a conductive fabric and a metal layer located on at least one surface of the conductive fabric. The metal layer includes a first metal material.

Optionally, the first metal material includes, but is not limited to, one or more of copper, copper alloy, nickel, nickel alloy, aluminum, aluminum alloy, titanium, or titanium alloy.

Optionally, the metal layer assumes a mesh structure. The parameters (such as porosity and areal density) of the mesh-structured metal layer may be learned by referring to the description of the parameters of the second three-dimensional framework layer, the details of which are omitted here.

Optionally, the conductive fabric includes, but is not limited to, a carbon fiber fabric.

The metal layer may be obtained by a physical vapor deposition process or a chemical plating process. As an example, the chemical plating process may include the following steps: Pretreating the conductive fabric, and then performing a chemical plating process on the conductive fabric in a plating solution that contains first metal ions, and then taking out the conductive fabric upon completion of the chemical plating, washing the conductive fabric with water, and drying the conductive fabric to obtain a substrate. The substrate includes the conductive fabric and a metal layer located on at least one surface of the conductive fabric. The metal layer includes a first metal material. The metal layer assumes a mesh structure.

In some embodiments, the conductive fabric may be removed by a burning process, so as to form a metal layer substrate that assumes a mesh structure. As a result of the burning process, the metal layer obtained by deposition or chemical plating may be oxidized. Therefore, a reduction treatment may be performed after the burning process, so as to obtain a metal layer substrate of a mesh structure formed by the first metal material.

In some embodiments, the thickness of the substrate may be 0.003 mm to 1 mm, and optionally 0.005 mm to 1 mm, 0.005 mm to 0.90 mm, 0.005 mm to 0.80 mm, 0.005 mm to 0.70 mm, 0.005 mm to 0.60 mm, 0.006 mm to 1 mm, 0.006 mm to 0.90 mm, 0.006 mm to 0.80 mm, 0.006 mm to 0.70 mm, 0.006 mm to 0.60 mm, 0.008 mm to 1 mm, 0.008 mm to 0.90 mm, 0.008 mm to 0.80 mm, 0.008 mm to 0.70 mm, or 0.008 mm to 0.60 mm. This arrangement improves the gravimetric energy density of the battery, and also endows the negative current collector with appropriate strength, and improves the processing performance of the negative current collector. To improve accuracy, during the test, the thicknesses at a plurality of (for example, 5 or 10) positions may be measured, and the measured values are averaged out as a test result.

In some embodiments, the thickness of the negative current collector may be 0.015 mm to 1.5 mm, optionally 0.02 mm to 1.4 mm, 0.03 mm to 1.2 mm, 0.04 mm to 1.0 mm, 0.05 mm to 0.9 mm, 0.06 mm to 0.8 mm, 0.06 mm to 0.7 mm, or 0.06 mm to 0.6 mm. To improve accuracy, during the test, the thicknesses at a plurality of (for example, 5 or 10) positions may be measured, and the measured values are averaged out as a test result.

In some embodiments, a width of the substrate is denoted as W1, and a width of the first three-dimensional framework layer is denoted as W2, satisfying: W1 > W2, thereby facilitating formation of a tab on the substrate.

In some embodiments, the negative current collector may further include a second metal material. The second metal material provides a capacity.

In some embodiments, the second metal material may include one or more of lithium, lithium alloy, sodium, sodium alloy, potassium, potassium alloy, magnesium, or magnesium alloy.

In some embodiments, the second metal material may be located on the substrate and/or located on a surface and/or the pore structure of the first three-dimensional framework layer.

In some embodiments, the negative current collector includes a substrate and a first three-dimensional framework layer located on at least one surface of the substrate. Both the first three-dimensional framework layer and the substrate are fabric layers, and optionally, woven fabric layers. The first three-dimensional framework layer forms a pore structure. The first three-dimensional framework layer includes a first fiber. The first fiber includes one or more of carbon fiber or graphitized carbon fiber. The first fiber assumes a hollow structure. The substrate includes a first metal material. Optionally, the first metal material includes one or more of copper, copper alloy, nickel, nickel alloy, aluminum, aluminum alloy, titanium, or titanium alloy. Optionally, the areal density of the first three-dimensional framework layer is 0.04 mg/cm² to 150 mg/cm², and optionally 0.15 mg/cm² to 70 mg/cm². Optionally, the areal density of the substrate is 0.1 mg/cm² to 700 mg/cm², and optionally 0.15 mg/cm² to 200 mg/cm².

The following describes the negative current collector of this application with reference to drawings.

FIG. 2 is a schematic diagram of a negative current collector 10 of a battery according to an embodiment of this application. FIG. 3 is a schematic diagram of a negative current collector 10 of a battery according to another embodiment of this application.

As shown in FIG. 2, the negative current collector 10 includes a substrate 101 and a first three-dimensional framework layer 102 located on at least one surface of the substrate 101. A width of the substrate 101 is denoted as W1, and a width of the first three-dimensional framework layer 102 is denoted as W2, satisfying: W1 > W2, thereby enabling formation of a tab on the substrate 101.

An embodiment of this application further provides a method for preparing the negative current collector of this application.

The method includes the following steps: providing a substrate and a first three-dimensional framework layer; compounding the first three-dimensional framework layer onto at least one surface of the substrate to obtain a negative current collector, where the negative current collector includes the substrate and the first three-dimensional framework layer located on at least one surface of the substrate, the first three-dimensional framework layer forms a pore structure, the first three-dimensional framework layer includes first fibers, and each first fiber includes a carbon-based material.

In some embodiments, the providing a first three-dimensional framework layer includes the following steps: providing a first fibril; preparing a three-dimensional framework structure from the first fibril; and performing a carbonization treatment on the three-dimensional framework structure to form a first three-dimensional framework layer.

In some embodiments, the method includes the following steps: providing a substrate and a first fibril; preparing a three-dimensional framework structure from the first fibril; and compounding the three-dimensional framework structure onto at least one surface of the substrate and performing a carbonization treatment to obtain a negative current collector.

In some embodiments, the three-dimensional framework structure may be formed from the first fibril by different methods including a weaving process. For example, the weaving process may be one or more of plain weave, twill weave, basket plain weave, basket twill weave, reverse basket weave, and five-heddle weave.

In some embodiments, the substrate may be a non-pore structure, a porous structure, or a fabric layer structure, and optionally a fabric layer structure. For example, the substrate may be the metal foil, perforated foil, a foam structure, a mesh structure, a non-woven fabric layer structure, a woven fabric layer structure, or a combination thereof.

In some embodiments, a method for compounding the first three-dimensional framework layer (or a precursor thereof) with the substrate may include one or more of multi-layer weaving, a blending process, a deposition process, a hot-pressing process, or a bonding process.

For example, the first three-dimensional framework layer (or a precursor thereof) may be compounded with the substrate by a deposition process, a hot-pressing process, and/or a bonding process, optionally, a bonding process. The type of the binder is not particularly limited herein. As an example, the binder may include one or more of polyvinylidene difluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), fluorinated acrylic resin, styrene-butadiene rubber (SBR), watersoluble unsaturated resin SR-1B, aqueous acrylic resin (such as polyacrylic acid PAA, polymethacrylic acid PMAA, or polyacrylic acid sodium PAAS), polyacrylamide (PAM), polyvinyl alcohol (PVA), sodium alginate (SA), or carboxymethyl chitosan (CMCS).

When the substrate is a woven fabric layer structure, the first three-dimensional framework layer (or a precursor thereof) may be compounded with the substrate by a multi-layer weaving process or a blending process. For example, the first fibril and the second fiber may be woven separately to form a woven fabric layer. In some embodiments, the method includes the following steps: providing a first fibril and a second fiber, where the second fiber includes a first metal material; forming woven fabric layers by weaving the first fibril and the second fiber separately, where the woven fabric layer formed from the first fibril is located on at least one surface of the woven fabric layer formed from the second fiber, and then performing a carbonization treatment to obtain a negative current collector. In this way, the method can increase the bonding strength between the substrate and the first three-dimensional framework layer and simplify the preparation process of the negative current collector.

In some embodiments, the first fibril means a filament that can be carbonized to form a carbon-based material, and may include, for example, one or more of bio-based organic fiber or synthetic fiber.

In some embodiments, the bio-based organic fiber may include, but is not limited to, one or more of a cotton fiber, a lignin fiber, a hemp fiber, a palm fiber, a bamboo fiber, or a modified form or derivative thereof.

In some embodiments, the bio-based organic fiber includes one or more of a cotton fiber or a modified compound or derivative thereof. The cotton fiber is characterized by large throughput and low cost, and the body structure of the natural cotton fiber assumes a hollow structure and can form a hollowed first fiber, thereby facilitating metal deposition, improving the cycle performance and reliability of the battery, and also improving the gravimetric energy density of the battery.

The synthetic fiber means a fiber formed by chemical synthesis. In some embodiments, the synthetic fiber includes, but is not limited to, one or more of a polyacrylonitrile fiber, a polyvinyl pyrrolidone fiber, a polymethyl methacrylate fiber, a poly(styrene-co-acrylonitrile) fiber, or a modified compound or derivative fiber thereof. The modified compound may be a product of graft copolymerization modification or block copolymerization modification for a polymer. The derivative generally means a product derived from a polymer by replacing a hydrogen atom or atomic group in the polymer with another atom or atomic group.

The second fiber includes a first metal material. In some embodiments, optionally, the first metal material includes, but is not limited to, one or more of copper, copper alloy, nickel, nickel alloy, aluminum, aluminum alloy, titanium, or titanium alloy.

In some embodiments, the second fiber may be made of the first metal material. For example, the second fiber may include, but is not limited to, one or more of a copper wire, a copper alloy wire, a nickel wire, a nickel alloy wire, an aluminum wire, an aluminum alloy wire, a titanium wire, or a titanium alloy wire.

In some embodiments, the second fiber may include a non-metal material and a first metal material that overlays a surface of the non-metal material. For example, the surface of the non-metal material may be overlaid with a layer of the first metal material by evaporation or deposition. The non-metal material may be synthetic fibers, or the like.

In some embodiments, the carbonization treatment may be performed in an inert gas atmosphere. The inert gas may include one or more of nitrogen, argon, or helium.

In some embodiments, the carbonization treatment may be performed at a temperature of 400 °C to 3600 °C, and optionally 900 °C to 3500 °C.

In some embodiments, a temperature holding time in the carbonization treatment may be 1 to 20 hours, and optionally 1.5 to 10 hours.

In some embodiments, a heating rate in the carbonization treatment may be 1 °C/min to 20 °C/min, and optionally 5 °C/min to 10 °C/min.

In some embodiments, the substrate may include a conductive fabric and a metal layer located on at least one surface of the conductive fabric. The metal layer includes a first metal material. Optionally, the metal layer assumes a mesh structure. Optionally, the conductive fabric includes, but is not limited to, a carbon fiber fabric.

The metal layer may be obtained by a physical vapor deposition process or a chemical plating process. As an example, the chemical plating process may include the following steps: Pretreating the conductive fabric, and then performing a chemical plating process on the conductive fabric in a plating solution that contains first metal ions, and then taking out the conductive fabric upon completion of the chemical plating, washing the conductive fabric with water, and drying the conductive fabric to obtain a substrate. The substrate includes the conductive fabric and a metal layer located on at least one surface of the conductive fabric. The metal layer includes a first metal material. The metal layer assumes a mesh structure.

In some embodiments, the conductive fabric may be removed by a burning process, so as to form a metal layer substrate that assumes a mesh structure. As a result of the burning process, the metal layer obtained by deposition or chemical plating may be oxidized. Therefore, a reduction treatment may be performed after the burning process, so as to obtain a metal layer substrate of a mesh structure formed by the first metal material.

In some embodiments, the pretreatment process may include processes such as adhesive removal, roughening, sensitization, and activation. A commercially available conductive fabric involves a process of applying an adhesive layer through impregnation during preparation. Therefore, it is necessary to perform a chemical plating process after adhesive removal. The purpose of roughening is to increase the surface roughness of the conductive fabric, so that the surface of the conductive fabric changes from being hydrophobic to being hydrophilic. The roughening methods may include: mechanical roughening, solvent swelling roughening, and chemical roughening. The purpose of sensitization and activation is to adsorb a layer of easily oxidizable substance onto the surface of the conductive cloth, so as to enable a redox reaction during the activation and form a precious metal layer that exerts a catalytic effect. The precious metal layer serves as a catalyst for the chemical plating process to accelerate the reduction reaction in the chemical plating. The sensitization process and the activation process may be performed separately or together, without being limited herein.

The relevant parameters of the negative current collector, substrate, first three-dimensional framework layer, first fiber, second fiber, and the like involved in the preparation process of the negative current collector provided in this embodiment of this application can be learned by referring to the description of the parameters of the negative current collector described herein above, the details of which are omitted here. Unless otherwise specified, some raw materials used in the preparation process of the negative current collector provided in this embodiment of this application are commercially available.

### [Positive electrode plate]

The composition and structure of the positive electrode plate may be selected depending on the specific type of the battery, and are not limited herein.

In some embodiments, the positive electrode plate includes a positive current collector and a positive film layer disposed on at least one surface of the positive current collector and containing a positive active material. For example, the positive current collector includes two surfaces opposite to each other in a thickness direction of the positive current collector. The positive film layer is disposed on either or both of the two opposite surfaces of the positive current collector.

The type of the positive active material may be selected depending on the specific type of the battery, and is not limited herein.

For example, when the battery is a lithium metal battery, the positive active material may include, but is not limited to, one or more of lithium transition metal oxide, lithium-containing phosphate salt, or a modified compound thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. Examples of the lithium-containing phosphate salt include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon, or a modified compound thereof.

In some embodiments, in order to further increase the energy density of the battery, the positive active material for use in the lithium metal battery may include one or more of a lithium transition metal oxide represented by a general formula LiₐNi_{b}Co_{c}M_{d}OₑA_{f} or a modified compound thereof. In the general formula, 0.8 ≤ a ≤ 1.2, 0.5 ≤ b <1, 0 < c < 1,0 < d < 1, 1 ≤ e ≤ 2, 0 ≤ f ≤ 1, M includes one or more of Mn, Al, Zr, Zn, Cu, Cr, Mg, Fe, V, Ti, or B, and A includes one or more of N, F, S, or Cl.

As an example, the positive active material for use in a lithium metal battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, or LiMnPO₄.

When the battery is a sodium metal battery, the positive active material may include, but is not limited to, one or more of sodium transition metal oxide, a polyanionic material (such as phosphate, fluorophosphate, pyrophosphate, and sulfate), or a Prussian blue material.

As an example, the positive active material for use in a sodium metal battery may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, or a material represented by a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2; X includes one or more of H⁺, Li⁺, Na⁺, K⁺, or NH₄⁺; and M' includes a transition metal cation, and optionally includes one or more of V, Ti, Mn, Fe, Co, Ni, Cu, or Zn; and Y includes a halogen anion, and optionally includes one or more of F, Cl, or Br.

In this application, the modified compound of each positive active material described above may be a product of modifying the positive active material by doping and/or surface coating.

In some embodiments, the positive film layer further optionally includes a positive conductive agent. The type of the positive conductive agent is not particularly limited in this application. As an example, the positive conductive agent includes one or more of superconductive carbon, conductive graphite, acetylene black, carbon black, Ketjen black, carbon dots, carbon nanotubes, graphene, or carbon nanofibers.

In some embodiments, the positive film layer further optionally includes a positive binder. The type of the positive binder is not particularly limited in this application. As an example, the positive binder may include one or more of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylic resin.

In some embodiments, the positive current collector may be a metal foil or a composite current collector. As an example, an aluminum foil may be used as the metal foil. The composite current collector may include a polymer material substrate and a metal material layer formed on at least one surface of the polymer material substrate. As an example, the metal material may include one or more of aluminum, an aluminum alloy, nickel, a nickel alloy, titanium, a titanium alloy, silver, or a silver alloy. As an example, the polymer material substrate may include one or more of polypropylene (PP), polyethylene terephthalate (PET), polybutylene terephthalate (PBT), polystyrene (PS), or polyethylene (PE).

The positive film layer is generally formed by coating the positive current collector with a positive slurry and then performing drying and cold calendering. The positive slurry is generally formed by dispersing a positive active material, an optional conductive agent, an optional binder, and any other ingredients into a solvent and then stirring well. The solvent may be, but without being limited to, N-methyl-pyrrolidone (NMP).

### [Electrolyte]

The electrolyte serves to conduct active ions between the positive electrode plate and the negative electrode plate. The type of the electrolyte is not particularly limited in this application, and may be selected as required. For example, the electrolyte may include one or more of a solid electrolyte or a liquid electrolyte (that is, electrolyte solution).

In some embodiments, the electrolyte is an electrolyte solution. The electrolyte solution includes an electrolyte salt and a solvent. The types of the electrolyte salt and the solvent are not particularly limited, and may be selected as actually required.

For example, when the battery is a lithium metal battery, the electrolyte salt may include, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

When the battery is a sodium metal battery, as an example, the electrolyte salt may include, but is not limited to, one or more of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluoro(bisoxalato)phosphate (NaDFOP), or sodium tetrafluoro(oxalato)phosphate (NaTFOP).

The solvent may include one or more of an ester solvent (for example, carbonate ester, carboxylate ester, or sulfate ester), an ether solvent (for example, ether, alcohol ether, or fluoroether), or a sulfone solvent. As an example, the solvent may include, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), (ethylsulfonyl)ethane (ESE), dimethoxymethane (DMM), diglyme (DG), ethylene glycol dimethyl ether (DME), or tetraglyme.

In some embodiments, the electrolyte solution further optionally includes an additive, for example, an additive that improves overcharge performance of the battery, an additive that improves high-temperature performance of the battery, an additive that improves low-temperature power performance of the battery, and the like.

### [Separator]

A battery that employs an electrolyte solution and some batteries that employ a solid electrolyte further contain a separator. Disposed between the positive electrode plate and the negative current collector, the separator primarily serves to prevent a short circuit between the positive electrode plate and the negative electrode plate. The type of the separator is not particularly limited in this application, and may be any well-known porous separator that is highly stable both chemically and mechanically.

In some embodiments, the material of the separator may include one or more of glass fibers, non-woven fabric, polyethylene, polypropylene, or polyvinylidene fluoride. The separator may be a single-layer film or a multilayer composite film. When the separator is a multilayer composite film, materials of different layers may be identical or different.

In some embodiments, the positive electrode plate, the separator, and the negative current collector may be made into an electrode assembly by winding and/or stacking.

In some embodiments, the battery may include an outer package. The outer package may be configured to package the electrode assembly and the electrolyte solution.

In some embodiments, the outer package may be a hard shell such as a hard plastic shell, an aluminum shell, a steel shell, or the like. Alternatively, the outer package of the battery may be a soft package such as a pouch-type soft package. The material of the soft package may be plastic such as one or more of polypropylene (PP), polybutylene terephthalate (PBT), or polybutylene succinate (PBS).

The shape of the battery is not particularly limited in this application, and may be cylindrical, prismatic or in any other shape. FIG. 4 shows a prismatic battery 5 as an example.

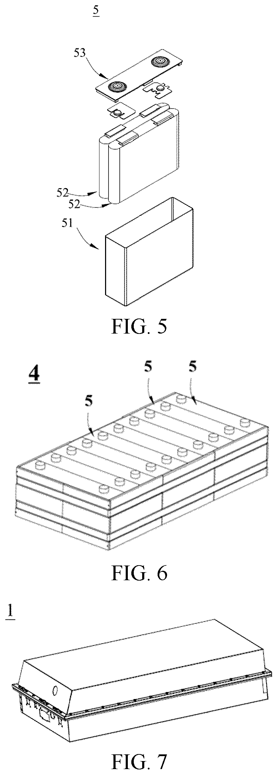

In some embodiments, as shown in FIG. 5, the outer package may include a housing 51 and a cover plate 53. The housing 51 may include a bottom plate and a side plate connected to the bottom plate. The bottom plate and the side plate close in to form an accommodation cavity. The housing 51 is equipped with an opening that communicates with the accommodation cavity. The cover plate 53 is configured to fit and cover the opening to close the accommodation cavity. The positive electrode plate, the negative current collector, and the separator may be made into the electrode assembly 52 by winding and/or stacking. The electrode assembly 52 is packaged in the accommodation cavity. The electrolyte solution infiltrates in the electrode assembly 52. The number of electrode assemblies 52 included in the battery 5 may be one or more, and is adjustable as required.

The method for preparing the battery in this application is well-known. In some embodiments, the positive electrode plate, the separator, the negative current collector, and the electrolyte solution may be assembled to form a battery. An example of the method for preparing the battery is: assembling the positive electrode plate, the separator, and the negative current collector to form an electrode assembly by winding and/or stacking, placing the electrode assembly into an outer package, performing drying and then injecting an electrolyte solution, and performing steps such as vacuum sealing, standing, chemical formation, and shaping to obtain a battery.

In some embodiments, the batteries according to this application may be assembled to form a battery module. The number of the batteries included in a battery module may be plural, and may be adjusted according to the use and capacity of the battery module.

FIG. 6 is a schematic diagram of a battery module 4 as an example. As shown in FIG. 6, in the battery module 4, a plurality of batteries 5 may be arranged sequentially along a length direction of the battery module 4. Alternatively, the batteries may be arranged in any other manner. Further, the plurality of batteries 5 may be fixed by a fastener.

Optionally, the battery module 4 may further include a shell that provides an accommodation space. The plurality of batteries 5 are accommodated in the accommodation space.

In some embodiments, the battery module may be assembled to form a battery pack. The number of the battery modules contained in a battery pack may be adjusted according to the use and capacity of the battery pack.

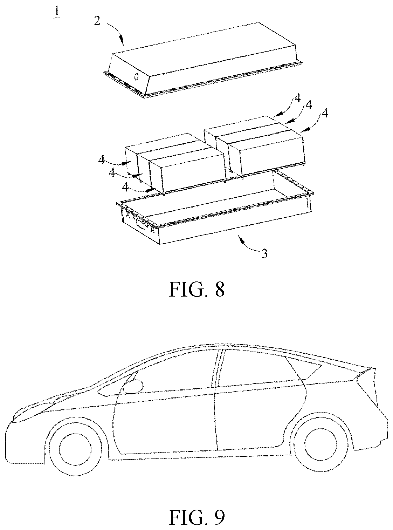

FIG. 7 and FIG. 8 are schematic diagrams of a battery pack 1 as an example. As shown in FIG. 7 and FIG. 8, the battery pack 1 may contain a battery box and a plurality of battery modules 4 disposed in the battery box. The battery box includes an upper box 2 and a lower box 3. The upper box 2 is configured to fit and cover the lower box 3 to form a closed space for accommodating the battery modules 4. The plurality of battery modules 4 may be arranged in the battery box in any manner.

An embodiment of this application further provides an electrical device. The electrical device includes one or more of the battery, battery module, or battery pack disclosed in this application. The battery, battery module, or battery pack may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery, the battery module, or the battery pack may be selected for use in the electrical device according to practical requirements of the electrical device.

FIG. 9 is a schematic diagram of an electrical device as an example. The electrical device may be a battery electric vehicle, a hybrid electric vehicle, a plug-in hybrid electric vehicle, or the like. A battery pack or a battery module may be employed to meet the requirements of the electrical device for a high power and a high energy density.

In another example, the electrical device may be a mobile phone, a tablet computer, a laptop computer, or the like. The electrical device is generally required to be thin and light, and may use a battery as a power supply.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Embodiment 1

### Preparing a negative current collector

Providing a copper wire of 0.02 mm in diameter, and weaving the copper wire into a 150-mesh copper mesh by plain weaving, and using the copper mesh as a substrate ready for use, where the areal density of the copper mesh is 3.2 mg/cm².

Providing a cotton thread of 0.15 mm in diameter (as a first fibril), weaving the cotton thread into a 27-mesh cotton fabric by plain weaving, and then performing a carbonization treatment in a nitrogen atmosphere; and, upon completion of the carbonization treatment, naturally cooling the cotton fabric to room temperature to obtain a first three-dimensional framework layer. The carbonization treatment is performed at a temperature of 1200 °C, and the temperature rises to this temperature at a heating rate of 10 °C/min, and the holding time is 4 hours. The first three-dimensional framework layer assumes a woven fabric layer structure. The first fiber is a hollow carbon fiber, the diameter of the first fiber is 0.13±0.01 mm, and the areal density of the first three-dimensional framework layer is 4 mg/cm².

The resultant first three-dimensional framework layer is bonded to the two surfaces of the copper mesh by using a binder, thereby obtaining a negative current collector.

### Embodiment 2

The negative current collector is prepared by a method similar to that in Embodiment 1 except that the carbonization treatment is performed at a temperature of 3500 °C and the first fiber is a hollow graphitized carbon fiber.

### Embodiment 3

The negative current collector is prepared by a method similar to that in Embodiment 1 except that the first fibril is a polyacrylonitrile fiber, the first fiber is a solid carbon fiber, and the areal density of the first three-dimensional framework layer is 18 mg/cm².

### Embodiment 4

The negative current collector is prepared by a method similar to that in Embodiment 1 except that the mesh size of the cotton fabric is adjusted to such a value that the areal density of the first three-dimensional framework layer was 6.8 mg/cm².

### Embodiment 5

The negative current collector is prepared by a method similar to that in Embodiment 1 except that the mesh size of the copper mesh is adjusted to such a value that the areal density of the copper mesh is 7.2 mg/cm².

### Embodiment 6

The negative current collector is prepared by a method similar to that in Embodiment 1 except that the substrate is a copper foil with a thickness of 8 µm.

### Embodiment 7

The negative current collector is prepared by a method similar to that in Embodiment 1 except that the substrate is a laser-perforated copper foil with an areal density of 3.0 mg/cm².

### Embodiment 8

The negative current collector is prepared by a method similar to that in Embodiment 1 except that the substrate is foamed copper and the areal density of the foamed copper is 180 mg/cm².

### Embodiment 9

The negative current collector is prepared by a method similar to that in Embodiment 1 except that the substrate is a copper fiber non-woven fabric that assumes a non-woven fabric layer structure.

The copper fiber non-woven fabric is prepared by the following process: dispersing a copper wire of 0.02 mm in diameter and 20 mm in length into water, and adding an appropriate amount of thickener to make a slurry; applying the slurry onto a carrier at such a concentration that the areal density is 3.2 mg/cm², and then drying and dehydrating the slurry, and then removing the carrier to obtain a copper fiber non-woven fabric.

### Embodiment 10

The negative current collector is prepared by a method similar to that in Embodiment 1 except that the first three-dimensional framework layer is a carbon fiber non-woven fabric that assumes a non-woven fabric layer structure.

The carbon fiber non-woven fabric is prepared by the following process: hydroentangling a cotton thread of 0.15 mm in diameter and 50 nm in length (as a first fibril) by using a hydroentangling machine with high-pressure water jets so as to obtain a non-woven fabric, and then performing a carbonization treatment in a nitrogen atmosphere; and, upon completion of the carbonization treatment, naturally cooling the fabric to room temperature to obtain a carbon fiber non-woven fabric. The carbonization treatment is performed at a temperature of 1200 °C, and the temperature rises to this temperature at a heating rate of 10 °C/min, and the holding time is 4 hours. The areal density of the carbon fiber non-woven fabric is 4 mg/cm².

The resultant carbon fiber non-woven fabric is bonded to the two surfaces of the copper mesh by using a binder, thereby obtaining a negative current collector.

### Comparative Embodiment 1

### Preparing a negative current collector

Providing a cotton thread of 0.15 mm in diameter, weaving the cotton thread into a 27-mesh cotton fabric by plain weaving, and then performing a carbonization treatment in a nitrogen atmosphere; and, upon completion of the carbonization treatment, naturally cooling the cotton fabric to room temperature to obtain a carbon fiber mesh. The carbonization treatment is performed at a temperature of 1200 °C, and the temperature rises to this temperature at a heating rate of 10 °C/min, and the holding time is 4 hours. The areal density of the carbon fiber mesh is 4 mg/cm², and the carbon fiber assumes a hollow structure.

### Comparative Embodiment 2

Providing a copper wire of 0.02 mm in diameter, and weaving the copper wire into a 150-mesh copper mesh by plain weaving, and using the copper mesh as a negative current collector, where the areal density of the copper mesh is 3.2 mg/cm².

### Performance Test

Preparing a positive electrode plate: Mixing well a positive active material LiFePO₄, a conductive agent carbon black (Super P), and a binder polyvinylidene difluoride (PVDF) at a mass ratio of 96: 2: 2 in an appropriate amount of N-methyl-pyrrolidone (NMP) solvent to obtain a positive electrode slurry; applying the positive electrode slurry onto a positive current collector aluminum foil, and performing steps such as oven-drying, cold-pressing, slitting, and cutting to obtain a positive electrode plate. The areal density of the positive electrode plate is 4 mAh/cm².

Preparing a separator: Using a PE porous substrate of 5.2 µm in thickness as a separator.

Preparing an electrolyte solution: Using ethylene glycol dimethyl ether (DME) as a solvent, and adding LiFSI into the solvent in batches, and heating and stirring the solution to dissolve the LiFSI to make an electrolyte solution in which the concentration of the LiFSI is 1 mol/L.

Preparing a battery: Stacking the positive electrode plate, the separator, and the above-prepared negative current collector in sequence, and winding the stacked structure to form an electrode assembly; putting the electrode assembly into an outer package, performing drying and then injecting an electrolyte solution, and then performing steps such as vacuum sealing, standing, chemical formation, and shaping to obtain a battery.

Testing the cycle performance: Charging the above-prepared battery at a constant current of 0.2C at 25 °C until the voltage reaches 3.65 V, and then charging the battery at a constant voltage until the current drops to 0.1C indicating that the battery is in a fully charged state, and recording the charge capacity at this time as a 1^{st}-cycle charge capacity; leaving the battery to stand for 5 minutes, and then discharging the battery at a constant current of 0.5C until the voltage drops to 2.0 V, thereby completing one charge-discharge cycle. Recording the discharge capacity at this time as a 1^{st}-cycle discharge capacity. Repeating the charge-discharge cycle of the battery in the way described above, and recording the discharge capacity at the end of each cycle until the discharge capacity of the battery fades to 60% of the 1^{st}-cycle discharge capacity. The number of cycles at this time represents the cycle performance of the battery. The higher the number of cycles of the battery, the higher the cycle performance.

In Comparative Embodiment 1, a carbon fiber mesh is used as a negative current collector. During the winding, the carbon fiber mesh is torn and powdered, and the tensile strength of the carbon fiber mesh is nearly 0, thereby failing to prepare the battery.

As can be seen from the test results in Table 1, characterized by high tensile strength and good processing performance, the negative current collector provided in this application enables welding or die-cutting of tabs and endows the battery with a relatively long cycle life.

As can be seen from the test results of Embodiment 1 and Embodiment 3, when the first fiber assumes a hollow structure, the battery is endowed with a longer cycle life and a higher gravimetric energy density.

As can be seen from the test results of Embodiments 1 to 10, when both the substrate and the first three-dimensional framework layer of the negative current collector provided in this application assume a woven fabric layer structure, the battery is endowed with a longer cycle life.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**Table 1 (To be continued)**

| Serial number | First fibril | | Carbonization parameter | | First three-dimensional framework layer | | | |
|---|---|---|---|---|---|---|---|---|
| | Type | Diameter (mm) | Temperature (°C) | Holding time (h) | Structure | Type of first fiber | Diameter (mm) | Areal density (mg/cm²) |
| Embodiment 1 | Cotton fiber | 0.15 | 1200 | 4 | Woven fabric layer | Hollow carbon fiber | 0.13±0.01 | 4 |
| Embodiment 2 | Cotton fiber | 0.15 | 3500 | 4 | Woven fabric layer | Hollow graphitized carbon fiber | 0.13±0.01 | 4 |
| Embodiment 3 | Polyacrylonitrile fiber | 0.15 | 1200 | 4 | Woven fabric layer | Solid carbon fiber | 0.13±0.01 | 18 |
| Embodiment 4 | Cotton fiber | 0.15 | 1200 | 4 | Woven fabric layer | Hollow carbon fiber | 0.13±0.01 | 6.8 |
| Embodiment 5 | Cotton fiber | 0.15 | 1200 | 4 | Woven fabric layer | Hollow carbon fiber | 0.13±0.01 | 4 |
| Embodiment 6 | Cotton fiber | 0.15 | 1200 | 4 | Woven fabric layer | Hollow carbon fiber | 0.13±0.01 | 4 |
| Embodiment 7 | Cotton fiber | 0.15 | 1200 | 4 | Woven fabric layer | Hollow carbon fiber | 0.13±0.01 | 4 |
| Embodiment 8 | Cotton fiber | 0.15 | 1200 | 4 | Woven fabric layer | Hollow carbon fiber | 0.13±0.01 | 4 |
| Embodiment 9 | Cotton fiber | 0.15 | 1200 | 4 | Woven fabric layer | Hollow carbon fiber | 0.13±0.01 | 4 |
| Embodiment 10 | Cotton fiber | 0.15 | 1200 | 4 | Non-woven fabric layer | Hollow carbon fiber | 0.13±0.01 | 4 |
| Comparative Embodiment 2 | / | / | / | / | / | / | / | / |

**Table 1 (Continued)**

| Serial number | Second fiber | | Substrate | | | Number of cycles |
|---|---|---|---|---|---|---|
| | Type | Diameter (mm) | Structure | Diameter (mm) | Areal density (mg/cm²) | |
| Embodiment 1 | Copper wire | 0.02 | Woven fabric layer | 0.02 | 3.2 | 380@60%SOH |
| Embodiment 2 | Copper wire | 0.02 | Woven fabric layer | 0.02 | 3.2 | 160@60%SOH |
| Embodiment 3 | Copper wire | 0.02 | Woven fabric layer | 0.02 | 3.2 | 225@60%SOH |
| Embodiment 4 | Copper wire | 0.02 | Woven fabric layer | 0.02 | 3.2 | 275@60%SOH |
| Embodiment 5 | Copper wire | 0.02 | Woven fabric layer | 0.02 | 7.2 | 350@60%SOH |
| Embodiment 6 | / | / | Copper foil | / | / | 360@60%SOH |
| Embodiment 7 | / | / | Perforated copper foil | / | 3.0 | 365@60%SOH |
| Embodiment 8 | / | / | Foamed copper | / | 180 | 350@60%SOH |
| Embodiment 9 | Copper wire | 0.02 | Non-woven fabric layer | 0.02 | 3.2 | 360@60%SOH |
| Embodiment 10 | Copper wire | 0.02 | Woven fabric layer | 0.02 | 3.2 | 255@60%SOH |
| Comparative Embodiment 2 | Copper wire | 0.02 | Woven fabric layer | 0.02 | 3.2 | 60@60%SOH |

## Claims

1. A negative current collector, wherein the negative current collector comprises a substrate and a first three-dimensional framework layer located on at least one surface of the substrate, the first three-dimensional framework layer forms a pore structure, the first three-dimensional framework layer comprises first fibers, and each first fiber comprises a carbon-based material.

2. The negative current collector according to claim 1, wherein the first fibers comprise one or more of carbon fibers or graphitized carbon fibers.

3. The negative current collector according to claim 1 or 2, wherein the first fiber assumes a hollow structure; and
optionally, a wall thickness of the first fiber is 0.04 µm to 2 µm, and further optionally 0.06 µm to 1 µm.

4. The negative current collector according to any one of claims 1 to 3, wherein a surface of the first fiber assumes the pore structure.

5. The negative current collector according to any one of claims 1 to 4, wherein a surface of the first fiber is doped with a lithium-philic element, and optionally, the lithium-philic element comprises one or more of Ag, Au, Sn, Zn, Pd, Bi, N, B, or P.

6. The negative current collector according to any one of claims 1 to 5, wherein
the first three-dimensional framework layer is a fabric layer, and optionally a woven fabric layer; and/or
the substrate is a non-pore structure, a porous structure, or a fabric layer structure.

7. The negative current collector according to any one of claims 1 to 6, wherein the first three-dimensional framework layer satisfies at least one of the following conditions:
(1) the first fiber is a fiber tow or a single fiber filament, and optionally a fiber tow;
(2) a filament diameter of the first three-dimensional framework layer is 0.01 mm to 0.50 mm, and optionally 0.025 mm to 0.20 mm;
(3) an areal density of the first three-dimensional framework layer is 0.04 mg/cm² to 150 mg/cm², and optionally 0.15 mg/cm² to 70 mg/cm²; or
(4) a porosity of the first three-dimensional framework layer is 40% to 95%, and optionally 70% to 88%.

8. The negative current collector according to any one of claims 1 to 7, wherein the substrate comprises a first metal material, and optionally, the first metal material comprises one or more of copper, copper alloy, nickel, nickel alloy, aluminum, aluminum alloy, titanium, or titanium alloy.

9. The negative current collector according to any one of claims 1 to 8, wherein the substrate assumes a fabric layer structure, the substrate comprises a second three-dimensional framework layer, and the second three-dimensional framework layer comprises second fibers, and each second fiber comprises a first metal material;
optionally, the second fiber is made of the first metal material, or, the second fiber comprises a non-metal material and a first metal material that overlays a surface of the non-metal material; and
optionally, the first metal material comprises one or more of copper, copper alloy, nickel, nickel alloy, aluminum, aluminum alloy, titanium, or titanium alloy.

10. The negative current collector according to claim 9, wherein the second three-dimensional framework layer satisfies at least one of the following conditions:
(1) a diameter of the second three-dimensional framework layer is 0.003 mm to 0.60 mm, and optionally 0.01 mm to 0.25 mm;
(2) an areal density of the second three-dimensional framework layer is 0.1 mg/cm² to 700 mg/cm², and optionally 0.15 mg/cm² to 200 mg/cm²;
(3) a porosity of the second three-dimensional framework layer is 20% to 95%, and optionally 60% to 92%; or
(4) the second three-dimensional framework layer is a woven fabric layer.

11. The negative current collector according to claim 9 or 10, wherein the second three-dimensional framework layer is a woven fabric layer that is woven from a warp filament and a weft filament;
in a warp direction, the second three-dimensional framework layer comprises a first sparse region located in a middle of the framework layer, and a first dense region **and a second** dense region located at edges of the first sparse region on two sides respectively; and/or
in a weft direction, the second three-dimensional framework layer comprises a second sparse region located in a middle of the framework layer, and a third dense region and a fourth dense region located at edges of the second sparse region on two sides respectively.

12. The negative current collector according to any one of claims 1 to 11, wherein the substrate comprises a conductive fabric and a metal layer located on at least one surface of the conductive fabric, and the metal layer comprises a first metal material;
optionally, the first metal material comprises one or more of copper, copper alloy, nickel, nickel alloy, aluminum, aluminum alloy, titanium, or titanium alloy;
optionally, the metal layer assumes a mesh structure; and
optionally, the conductive fabric comprises a carbon fiber fabric.

13. The negative current collector according to any one of claims 1 to 12, wherein a width of the substrate is denoted as W1, and a width of the first three-dimensional framework layer is denoted as W2, satisfying: W1 > W2.

14. The negative current collector according to any one of claims 1 to 13, wherein
a thickness of the first three-dimensional framework layer is 0.01 mm to 1 mm, and optionally 0.04 mm to 0.4 mm; and/or
a thickness of the substrate is 0.003 mm to 1 mm, and optionally 0.005 mm to 0.6 mm; and/or
a thickness of the negative current collector is 0.015 mm to 1.5 mm, and optionally 0.06 mm to 0.8 mm.

15. The negative current collector according to any one of claims 1 to 14, wherein the negative current collector further comprises a second metal material, and the second metal material provides a capacity;
optionally, the second metal material is located on the substrate and/or located on a surface and/or the pore structure of the first three-dimensional framework layer; and
optionally, the second metal material comprises one or more of lithium, lithium alloy, sodium, sodium alloy, potassium, potassium alloy, magnesium, or magnesium alloy.

16. A method for preparing a negative current collector, comprising the following steps: providing a substrate and a first three-dimensional framework layer; compounding the first three-dimensional framework layer onto at least one surface of the substrate to obtain a negative current collector, wherein the negative current collector comprises the substrate and the first three-dimensional framework layer located on at least one surface of the substrate, the first three-dimensional framework layer forms a pore structure, the first three-dimensional framework layer comprises first fibers, and each first fiber comprises a carbon-based material.

17. The method according to claim 16, wherein the method comprises the following steps: providing a substrate and a first fibril; preparing a three-dimensional framework structure from the first fibril; and compounding the three-dimensional framework structure onto at least one surface of the substrate and performing a carbonization treatment to obtain a negative current collector.

18. The method according to claim 16, wherein the method comprises the following steps: providing a first fibril and a second fiber, wherein the second fiber comprises a first metal material; forming woven fabric layers by weaving the first fibril and the second fiber separately, wherein the woven fabric layer formed from the first fibril is located on at least one surface of the woven fabric layer formed from the second fiber, and then performing a carbonization treatment to obtain a negative current collector.

19. The method according to claim 17 or 18, wherein the first fibril comprise one or more of a bio-based organic fiber or a synthetic fiber;
optionally, the bio-based organic fiber comprises one or more of a cotton fiber, a lignin fiber, a hemp fiber, a palm fiber, a bamboo fiber, or a modified form or derivative thereof;
optionally, the synthetic fiber comprises one or more of a polyacrylonitrile fiber, a polyvinyl pyrrolidone fiber, a polymethyl methacrylate fiber, a poly(styrene-co-acrylonitrile) fiber, or a modified compound or derivative fiber thereof.

20. The method according to any one of claims 17 to 19, wherein
the carbonization treatment is performed in an inert gas atmosphere; and/or
the carbonization treatment is performed at a temperature of 400°C to 3600 °C, and optionally 900 °C to 3500 °C; and/or
a temperature holding time in the carbonization treatment is 1 to 20 hours, and optionally 1.5 to 10 hours; and/or
a heating rate in the carbonization treatment is 1 °C/min to 20 °C/min, and optionally 5 °C/min to 10 °C/min.

21. A battery, comprising the negative current collector according to any one of claims 1 to 15 or a negative current collector prepared by the method according to any one of claims 16 to 20.

22. An electrical device, comprising the battery according to claim 21.
